# EUROPÄISCHE PATENTSCHRIFT

(11) **EP 1 362 559 B1**
(45) Veröffentlichungstag und Bekanntmachung des Hinweises auf die Patenterteilung: **17.10.2007**
(21) Anmeldenummer: 03007899.2
(22) Anmeldetag: 07.04.2003
(51) Int. Cl.: A61C 1/06, H02K 15/00, A61C 1/18, A61B 17/16

(54) **Motorhandstück**
Motor handpiece
Pièce à main à moteur

(30) Priorität: 24.04.2002 AT 2662002 U
(43) Veröffentlichungstag der Anmeldung: 19.11.2003
(73) Patentinhaber: W & H Dentalwerk Bürmoos GmbH, 5111 Bürmoos (AT)
(72) Erfinder: Mangelberger, Michael, 5113 St. Georgen bei Salzburg (AT); Schneider, Rainer, 5120 St. Pantaleon (AT)

(56) Entgegenhaltungen:
- EP-A- 0 670 149
- DE-A- 2 304 666
- DE-A- 19 753 491
- US-A- 5 941 891

## Beschreibung

Die vorliegende Erfindung betrifft ein Motorhandstück zum Antrieb eines mit dem Motorhandstück koppelbaren Werkzeugs und insbesondere Motorhandstücke, die für zahnärztliche oder zahntechnische Behandlungen verwendet werden.

Derartige Motorhandstücke bestehen im wesentlichen aus zwei Gehäuseteilen: Der eine Teil umfaßt einen Motor (üblicherweise einen Elektromotor), dem über eine Versorgungsleitung Strom zugeführt wird, sowie eine Welle, die mittels zweier Kugellager drehbar gelagert ist und durch den Motor in Rotation versetzt wird. Der andere Gehäuseteil umfaßt eine Spannvorrichtung für ein Bearbeitungswerkzeug. Die Spannvorrichtung ist als Teil einer Welle ausgebildet oder mit dieser gekoppelt. Auch diese Welle ist über zwei Kugellager drehbar gelagert.

Die beiden Gehäuseteile des Motorhandstückes sind miteinander verbunden, z.B. durch Verschraubung. Damit stehen die Wellen der beiden Teile über ein mechanisches Mitnehmersystem miteinander in Verbindung, so daß die durch den Motor erzeugte Rotationsbewegung über die erste Welle, das Mitnehmersystem und die zweite Welle auf das Werkzeug übertragen wird. Zusätzlich kann der Anwender durch das Verdrehen der beiden Gehäuseteile gegeneinander einen Mechanismus auslösen, der bewirkt, daß das in die Spannhülse eingesetzte Werkzeug kraftschlüssig fixiert wird.

Der beschriebene Aufbau des Motorhandstücks weist verschiedene Nachteile auf: Zur Lagerung der beiden Wellen sind vier Kugellager notwendig, die einerseits die Kosten der Herstellung deutlich erhöhen, andererseits gemeinsam mit dem mechanischen Mitnehmersystem eine starke Geräuschentwicklung verursachen. Im Bereich des Mitnehmersystems kann es weiters zu Verschleißerscheinungen kommen, die Reparaturmaßnahmen oder den Austausch des gesamten Handstücks zur Folge haben können.

Aus der US 5,941,891 ist ein chirurgisches Motorhandstück bekannt, bei dem die Spannvorrichtung für das anzutreibende Werkzeug im Inneren des Handstücks angeordnet ist. Das Werkzeug weist einen langen Schaft auf, der weit in das

Handstück hineinragt, um in der Spannvorrichtung eingespannt werden zu können. Um eine sichere und stabile Lagerung der Rotorwelle, der Welle mit Spannvorrichtung und des Werkzeugs zu gewährleisten, sind insgesamt fünf Kugellager vorgesehen.

Die EP 670 149 A1 offenbart ein Motorhandstück mit einer Welle und einem Motorzapfen, die über ein mechanisches Mitnehmersystem verbunden sind. Das Werkzeug, die Welle und der Zapfen sind durch drei Lager im Motorhandstück gelagert.

In der Patentanmeldung EP 0 920 839 A2 wird ein Motorhandstück beschrieben, bei dem die oben angeführten Nachteile beseitigt oder verringert werden. Das erfindungsgemäße Motorhandstück weist eine durchgängige, einstückige Welle auf, auf der sowohl der Einspannmechanismus als auch der Motor (Rotormagnet des Motors) angeordnet sind. Der Rotormagnet kann entweder auf die Welle aufgesetzt und durch Pressen und / oder Kleben fixiert werden oder der Bereich der Welle, der den Rotormagneten umfaßt, wird als Hohlraum ausgebildet, der Magnet in diesen Hohlraum gesteckt und wiederum durch Kleben und / oder Verpressen fixiert. Bei dem Motorhandstück "K5" der Anmelderin des EP 0 920 839 A2 ist der Magnet in den Hohlraum geklebt.

Durch die einstückige Bauweise der Welle sind zur Lagerung nur noch zwei Kugellager notwendig, das mechanische Mitnehmersystem entfällt vollkommen. Nachteilig ist bei dieser Bauweise jedoch, daß bei Beschädigung eines Teiles der Welle die gesamte einstückige Welle (inklusive Einspannmechanismus mit Feder und Rotormagnet) ausgetauscht werden muß. Speziell der Rotormagnet kann aufgrund der während der Rotation herrschenden Kräfte, verbunden mit manchmal auftretenden Fehlern im Material oder unsachgemäßer Behandlung des Handstückes (Herunterfallen vom Arbeitstisch o.ä.) leicht brechen. Wird der beschädigte Magnet nicht ausgetauscht, so besteht die Gefahr, daß sich Bruchstücke im Handstück verteilen und in Teile der Spannvorrichtung oder in Kugellager eindringen und diese beschädigen, wodurch das gesamte Motorhandstück unbrauchbar wird. Bei dem in der Patentanmeldung EP 0 920 839 A2 beschriebenen Motorhandstück ist aufgrund der einstückigen Bauweise der Welle mit dem aufgepreßten oder in einen Hohlraum eingefügten und verklebten Rotormagneten ein Austausch des Magneten alleine nicht möglich. Da vor allem die Spannvorrichtung ein fertigungstechnisch aufwendiges und kostenintensives Bauelement darstellt wäre es jedoch wünschenswert, den gebrochenen Magneten separat austauschen zu können ohne die gesamte Welle mit der Spannvorrichtung oder Teilen der Spannvorrichtung entsorgen zu müssen. Dies würde zu einer merkbaren Reduktion der Reparatur- und Servicekosten beitragen. Umgekehrt bestünde dadurch auch die Möglichkeit eine abgenützte Spannzangenaufnahme oder eine gebrochene Spannfeder des Spannsystems austauschen zu können, ohne den noch funktionsfähigen Rotormagneten ersetzen zu müssen.

Es besteht daher die Notwendigkeit der Lösung dieses Problems und es ist Ziel und Aufgabe der Erfindung, eine entsprechende Lösung zu präsentieren.

Der vorliegenden Erfindung liegt daher die Aufgabe zugrunde ein Motorhandstück zu schaffen, bei dem unter Wahrung der durch die Verwendung einer einstückigen Welle erreichten Vorteile die Möglichkeit besteht, Teile der Welle oder mit Teilen der Welle fest verbundene Bauteile des Motorhandstücks gegebenenfalls austauschen zu können, ohne dafür die gesamte Welle und alle mit der Welle verbundene Bauteile austauschen zu müssen.

Diese Aufgabe wird gemäß der vorliegenden Erfindung durch ein Motorhandstück mit den Merkmalen des Anspruchs 1 gelöst.

Das erfindungsgemäße Motorhandstück nach Anspruch 1 weist eine zweistückige Welle auf, wobei die beiden Teile mittels einer lösbaren Verbindung miteinander verbunden sind. In einem bevorzugten Ausführungsbeispiel kann diese Verbindung als Formschlußverbindung ausgebildet sein. In einem besonders bevorzugten Ausführungsbeispiel kann diese Verbindung als Schraubverbindung ausgebildet sein.

Dadurch wird ermöglicht, Teile der Welle oder mit Teilen der Welle fest verbundene Bauteile des Motorhandstücks voneinander lösen und gegebenenfalls austauschen zu können, ohne dafür die gesamte Welle und alle mit der Welle verbundene Bauteile ersetzen zu müssen. Aufgrund der lösbaren Verbindung der beiden Wellenteile reichen zur Lagerung der Welle zwei Kugellager aus und es wird kein mechanisches Mitnehmersystem zur Übertragung der Rotation von einem Wellenteil auf den anderen benötigt.

Bevorzugt ist an einem Wellenteil der Rotormagnet angebracht, an dem anderen Wellenteil das Spannsystem für das Werkzeug.

Die Erfindung wird nachfolgend anhand bevorzugter Ausführungsbeispiele und Bezug nehmend auf die beigefügten Zeichnungen erläutert:
Figur 1 zeigt ein erstes Ausführungsbeispiel eines erfindungsgemäßen Motorhandstücks
Figur 2 zeigt eine Variante des ersten Ausführungsbeispiel eines erfindungsgemäßen Motorhandstücks

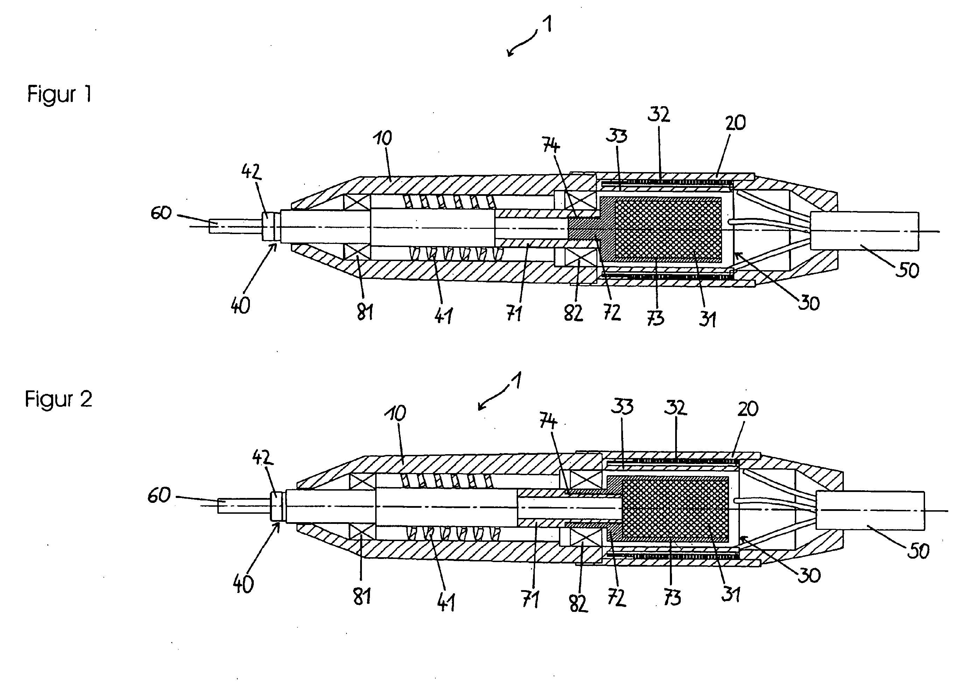

Das in Figur 1 dargestellte Motorhandstück 1 besteht aus zwei Teilen 10 und 20, wobei im Teil 20 der Motor 30 (in diesem Fall ein bürstenloser Elektromotor), im Teil 10 das Spannsystem 40 untergebracht sind. Der Motor 30 besteht aus einem Rotormagneten 31, einer Statorwicklung 32 und Wicklungskörper 33. Über die Versorgungsleitung 50 wird dem Motor 30 Strom zugeführt. Das Spannsystem 40 entspricht dem, einem Fachmann auf dem Gebiet der Dental- und Medizintechnik bekannten, Stand der Technik und ist daher nur in Form einer Außenansicht dargestellt: Erkennbar sind ein Teil der Spannzange 42 mit einem eingespannten Werkzeugschaft 60 sowie eine Spannfeder 41, gegen deren Federkraft durch Verdrehen der beiden Handstückteile 10 und 20 die Spannzange 42 in das Handstück hinein bewegt und der Werkzeugschaft 60 kraftschlüssig eingespannt wird.

In jedem der beiden Motorhandstückteile 10 und 20 befindet sich ein Wellenteil. Der vordere Wellenteil 71 bildet mit dem Spannsystem 40 und der Spannfeder 41 eine bauliche Einheit. Der hintere Wellenteil 72 ist an seinem Endabschnitt 73 als Hohlraum ausgebildet, in dem der Rotormagnet 31 aufgenommen wird. Der Endabschnitt des vorderen Wellenteils 71 und der vordere Teil des hinteren Wellenteils 72 sind erfindungsgemäß über eine lösbare Verbindung, bevorzugt eine Schraubverbindung 74 miteinander verbunden. Der Vorderabschnitt des Wellenteils 72 ist dabei in den Endabschnitt des Wellenteils 71 eingeschraubt. Aufgrund der Verschraubung der beiden Wellenteile 71 und 72 sind für die Lagerung beider Wellenteile nur zwei Kugellager 81 und 82 erforderlich.

Figur 2 zeigt eine Variante des Ausführungsbeispiels aus Figur 1. Gleiche Bauteile sind in beiden Figuren mit gleichen Bezugszeichen versehen, so daß hier nicht noch einmal auf das gesamte Motorhandstück eingegangen wird. Im Gegensatz zu Figur 1 ist hier der Vorderabschnitt des Wellenteils 72 über den Endabschnitt des Wellenteils 71 aufgeschraubt.

Die Erfindung ist nicht auf die dargestellten Ausführungsbeispiele beschränkt, so ist insbesondere die Art der lösbaren Verbindung der beiden Wellenteile variabel und könnte unter anderem auch als Bajonettverschluß oder mittels Bolzen erfolgen. Auch welche Bauteile des Motorhandstücks mit welchem Wellenteil verbunden sind und eine bauliche Einheit bilden kann von den dargestellten Ausführungsbeispielen abweichen.

## Patentansprüche

1. Motorhandstück (1) zum Antrieb eines mit dem Motorhandstück (1) koppelbaren Werkzeuges (60) mit einem Motor (30), einem Spannsystem (40) zum Einspannen eines Werkzeuges (60) und zwei Wellenteilen (71, 72) zur Übertragung der vom Motor (30) erzeugten Rotationsbewegung auf das Spannsystem (40), wobei das Spannsystem (40) an einem der Wellenteile (71, 72) angebracht ist und wobei die beiden Wellenteile (71, 72) mittels einer lösbaren Verbindung miteinander verbindbar sind,
**dadurch gekennzeichnet, daß**
das Motorhandstück (1) nur zwei Kugellager (81, 82) aufweist, die zur Lagerung der beiden Wellenteile (71, 72) vorgesehen sind.

2. Motorhandstück (1) nach Anspruch 1,
**dadurch gekennzeichnet, daß**
jeweils ein Kugellager (81, 82) an einem der Wollenteile (71, 72) angeordnet ist.

3. Motorhandstück (1) nach Anspruch 1 oder 2,
**dadurch gekennzeichnet, daß**
das Spannsystem (40) an einem Ende das Motorhandstücks (1) angeordnet ist.

4. Motorhandstück (1) nach einem der vorhergehenden Ansprüche,
**gekennzeichnet durch**
zwei Motorhandstückteile (10, 20), die zur Betätigung des Spannsystems (40) gegeneinander verdrehbar sind.

5. Motorhandstück (1) nach einem der vorhergehenden Ansprüche,
**dadurch gekennzeichnet, daß**
die lösbare Verbindung als Formschlußverbindung oder als Schraubverbindung (74) ausgebildet ist

6. Motorhandstück (1) nach Anspruch 5,
**dadurch gekennzeichnet, daß**
ein Abschnitt eines Wellenteils (71, 72) über einen Abschnitt des anderen Wellenteils (71, 72) ragt.

7. Motorhandstück(1) nach einem der vorhergehenden Ansprüche,
**dadurch gekennzeichnet, daß**
eines der beiden Kugellager (81, 82) im Bereich der lösbaren Verbindung der beiden Wellenteile (71, 72) vorgesehen ist.

8. Motorhandstück (1) nach einem der vorhergehenden Ansprüche,
**dadurch gekennzeichnet, daß**
einer der beiden Wellenteile (71, 72) mit dem Spannsystem (40) eine bauliche, separat austauschbare Einheit bildet.

9. Motorhandstück (1) nach einem der vorhergehenden Ansprüche,
**dadurch gekennzeichnet, daß**
einer der beiden Wellenteile (71, 72) mit dem Rotormagnet (31) des Motors (30) eine bauliche, separat austauschbare Einheit bildet.

10. Motorhandstück (1) nach einem der vorhergehenden Ansprüche,
**dadurch gekennzeichnet, daß**
beide (81, 82) an einer Seite des Motors (30) angeordnet sind.

11. Motorhandstück (1) nach einem der vorhergehenden Ansprüche,
**gekennzeichnet durch**
zwei Motorhandstückteile (10, 20), wobei in jedem Motorhandstückteil (10, 20) ein Wellenteil (71, 72) angeordnet ist.

## Claims

1. A motor handpiece (1) for driving a tool (60) that can be connected to the motor handpiece (1) with a motor (30), a chucking system (40) for chucking a tool (60) and two shaft parts (71, 72) for transferring the rotational movement generated by the motor (30) to the chucking system (40), whereby the chucking system (40) is mounted on one of the shaft parts (71, 72) and the two shaft parts (71, 72) can be joined to one another by means of a detachable connection,
**characterized in that**
the motor handpiece (1) has only two ball bearings (81, 82) which are provided for supporting the two shaft parts (71, 72).

2. The motor handpiece (1) according to claim 1,
**characterized in that**
each ball bearing (81, 82) is arranged on one of the shaft parts (71, 72).

3. The motor handpiece (1) according to claim 1 or 2,
**characterized in that**
the chucking system (40) is arranged on one end of the motor handpiece (1).

4. The motor handpiece (1) according to any one of the preceding claims,
**characterized by**
two motor handpiece parts (10, 20) which can be rotated in opposite directions for operation of the chucking system (40).

5. The motor handpiece (1) according to any one of the preceding claims,
**characterized in that**
the detachable connection is designed as a form-fitting connection or as a screw connection (74).

6. The motor handpiece (1) according to claim 5,
**characterized in that**
a section of a shaft part (71, 72) protrudes beyond a section of the other shaft part (71, 72).

7. The motor handpiece (1) according to any one of the preceding claims,
**characterized in that**
one of the two ball bearings (81, 82) is provided in the area of the detachable connection of the two shaft parts (71, 72).

8. The motor handpiece (1) according to any one of the preceding claims,
**characterized in that**
one of the two shaft parts (71, 72) forms a structural, separately replaceable unit together with the chucking system (40).

9. The motor handpiece (1) according to any one of the preceding claims,
**characterized in that**
one the two shaft parts (71, 72) together with the rotor magnet (31) of the motor (30) forms a structural, separately replaceable unit.

10. The motor handpiece (1) according to any one of the preceding claims,
**characterized in that**
both ball bearings (81, 82) are arranged on one side of the motor (30).

11. The motor handpiece (1) according to any one of the preceding claims,
**characterized by**
two motor handpiece parts (10, 20), whereby one shaft part (71, 72) is arranged in each motor handpiece part (10, 20).

## Revendications

1. Pièce manuelle de moteur (1) destinée à l'actionnement d'un outil (60) qui peut être couplé avec la pièce manuelle de moteur (1), avec un moteur (30), un système de serrage (40) pour le serrage d'un outil (60) et deux pièces d'onde (71, 72) pour la transmission des mouvements de rotation produits par le moteur (30) vers le système de serrage (40), le système de serrage (40) étant relié à l'une des pièces d'onde (71, 72) et les deux pièces d'onde (71, 72) pouvant être reliées entre elles au moyen d'un assemblage détachable,
**caractérisée en ce que**
la pièce manuelle de moteur (1) ne comporte que deux roulements à bille (81, 82) qui sont prévus pour loger les deux pièces d'onde (71, 72).

2. Pièce manuelle de moteur (1) selon la revendication 1,
**caractérisée en ce que**
chacun des roulements à bille (81, 82) est placé sur l'une des pièces d'onde (71, 72).

3. Pièce manuelle de moteur (1) selon la revendication 1 ou 2,
**caractérisée en ce que**
le système de serrage (40) est situé sur l'une des extrémités de la pièce manuelle de moteur (1).

4. Pièce manuelle de moteur (1) selon l'une des précédentes revendications,
**caractérisée en ce que**
deux éléments (10, 20) de pièce manuelle de moteur peuvent effectuer une rotation l'un par rapport à l'autre pour l'actionnement du système de serrage (40).

5. Pièce manuelle de moteur (1) selon l'une des précédentes revendications,
**caractérisée en ce que**
l'assemblage détachable est conçu comme un assemblage par complémentarité de forme ou par vissage (74).

6. Pièce manuelle de moteur (1) selon la revendication 5,
**caractérisée en ce que**
une section de la pièce d'onde (71, 72) dépasse une sur section de l'autre pièce d'onde (71, 72).

7. Pièce manuelle de moteur (1) selon l'une des précédentes revendications,
**caractérisée en ce que**
l'un des deux roulements à bille (81, 82) est prévu dans la région de l'assemblage détachable des deux pièces d'onde (71, 72).

8. Pièces manuelle de moteur (1) selon l'une des précédentes revendications,
**caractérisée en ce que**
l'une des deux pièces d'onde (71, 72) forme avec le système de serrage (40) une unité de construction qui peut être remplacée séparément.

9. Pièce manuelle de moteur (1) selon l'une des précédentes revendications
**caractérisée en ce que**
l'une des deux pièces d'onde (71, 72) forme avec l'aimant de rotor (31) du moteur (30) une unité de construction qui peut être remplacée séparément.

10. Pièce manuelle de moteur (1) selon l'une des précédentes revendications,
**caractérisée en ce que**
les deux roulements à bille (81, 82) sont prévus sur un côté du moteur (30).

11. Pièce manuelle de moteur (1) selon l'une des précédentes revendications,
**caractérisée par**
deux éléments (10, 20) de la pièce manuelle de moteur, chacun des deux éléments (10, 20) comprenant une pièce d'onde (71, 72).
